# EUROPÄISCHE PATENTSCHRIFT

(11) **EP 2 924 476 B1**
(45) Veröffentlichungstag und Bekanntmachung des Hinweises auf die Patenterteilung: **21.09.2016**
(21) Anmeldenummer: 15155878.0
(22) Anmeldetag: 20.02.2015
(51) Int. Cl.: G02B 3/14, G02B 26/00, G06K 7/00, G06K 7/10

(54) **OPTOELEKTRONISCHE VORRICHTUNG UND VERFAHREN ZUM AUFNEHMEN EINES BILDES**
OPTOELECTRONIC DEVICE AND METHOD FOR CAPTURING AN IMAGE
DISPOSITIF OPTOÉLECTRONIQUE ET PROCÉDÉ DE SAISIE D'UNE IMAGE

(30) Priorität: 24.03.2014 DE 102014104026
(43) Veröffentlichungstag der Anmeldung: 30.09.2015
(73) Patentinhaber: SICK AG, 79183 Waldkirch (DE)
(72) Erfinder: Schneider, Florian, 79276 Reute (DE)
(74) Vertreter: Hehl, Ulrich

(56) Entgegenhaltungen:
- EP-A1- 2 071 367
- EP-A1- 2 693 363
- DE-U1-202012 102 669
- DE-U1-202012 105 023
- US-A1- 2013 200 157

## Beschreibung

Die Erfindung betrifft eine optoelektronische Vorrichtung in stationärer Montage und ein Verfahren zum Aufnehmen eines Bildes eines bewegten Objekts nach dem Oberbegriff von Anspruch 1 beziehungsweise 12.

Die Empfangsoptik einer Kamera wird mit Hilfe einer Fokusverstellung auf einen bestimmten Abstand oder Abstandsbereich scharf eingestellt. Ein bekanntes Prinzip verstellt elektromechanisch oder optomechanisch die Position der Linsen und damit die Schnittweite der Empfangsoptik. Solche Lösungen erfordern viel Bauraum und stellen zudem hohe Ansprüche an den mechanischen Aufbau zur präzisen Einstellbarkeit, damit eine vorgegebene Fokuslage auch tatsächlich angenommen wird. Eine Alternative ist der Einsatz von Optiken, bei denen nicht die Schnittweite, sondern unmittelbar die Form und damit die Brennweite der Linse selbst mittels einer Spannungsansteuerung variiert wird. Insbesondere werden dafür Gel- oder Flüssiglinsen genutzt. Bei einer Gellinse wird eine silikonartige Flüssigkeit mittels piezoelektrischer oder induktiver Aktoren mechanisch deformiert. Flüssiglinsen nutzen beispielsweise den sogenannten Elektrobenetzungseffekt (electrowetting) aus, indem zwei nicht mischbare Flüssigkeiten in einer Kammer übereinander angeordnet werden. Bei Anlegen einer Steuerspannung ändern die beiden Flüssigkeiten ihre Oberflächenspannung in unterschiedlicher Weise, so dass die innere Grenzfläche der Flüssigkeiten spannungsabhängig ihre Krümmung verändert. Ein optoelektronischer Sensor mit Fokusverstellung auf Basis von Flüssiglinsen ist aus der DE 10 2005 015 500 A1 oder der DE 20 2006 017 268 U1 bekannt. Auch aus der DE 20 2012 102 669 U1 ist eine Sensoranordnung mit einer Flächenkamera bekannt, die mit Hilfe einer Flüssiglinse in ihrer Brennweite an eine Distanz zu erfassender Codes angepasst werden kann.

Die Fokussierung ist aber nur eine Herausforderung bei der Erzeugung hochwertiger Bilder, die beispielsweise für eine verlässliche automatisierte Bildauswertung oder noch spezieller das Lesen von Codes geeignet sein sollen. Besonders bei der Aufnahme bewegter Objekte wirkt sich die Wechselwirkung von Belichtungszeit und verfügbarem Licht nachteilig aus. Denn dann führt ein Ausgleich einer ungenügenden Ausleuchtung der Objekte mit längeren Belichtungszeiten zu unscharfen Bildern durch Bewegungsartefakte, also verwaschenen Aufnahmen der in ihrer Bewegung erfassten Objekte. Der herkömmliche Ausweg besteht darin, eine hochwertige und lichtstarke Beleuchtung einzusetzen, um die Bewegungsartefakte durch kurze Belichtungszeiten zu verringern. Dabei wird umso mehr Licht benötigt, je schneller die Objekte sich bewegen. Derartige Beleuchtungen, beispielsweise mit einer Vielzahl von leistungsstarken LEDs, sind aber teuer und verbrauchen viel Energie. Dadurch erhöht sich auch die Abwärme, und eine Erwärmung der Kamera bedeutet erhöhtes Bildsensorrauschen beziehungsweise Reduktion der Quantenausbeute. Die Folge sind wiederum Qualitätsverluste der Bilder und im Falle kamerabasierter Codeleser eine verringerte Leserate.

In Weiterbildung von Flüssiglinsen zur Fokusverstellung schlägt die EP 2 071 367 A1 vor, auch die Verkippung der Flüssiglinse durch Anlegen unterschiedlicher Spannungen in Umlaufrichtung zu verändern. Um die Aufnahme verwackelter Bilder zu verhindern, wird dann die Eigenbewegung der Kamera ermittelt, und eine oder mehrere Linsen in der Kamera werden verkippt, um dieser Eigenbewegung entgegenzuwirken. Im Falle der Aufnahme bewegter Objekte ist aber die Eigenbewegung der Kamera gar nicht die Ursache für Qualitätsverluste der Bilder. Außerdem ist bei einer stationären Montage der Kamera, wie sie in vielen industriellen Anwendungen üblich ist, die Eigenbewegung ohnehin ausgeschlossen und muss demnach auch nicht kompensiert werden.

In der DE 10 2005 015 500 A1 wird ein weiterer optoelektronischer Sensor mit einer Flüssiglinse offenbart, die durch einen asymmetrischen Rahmen oder unterschiedliche elektrische Potentiale an separaten Elektroden des Linsenrahmens in ihren Strahlformungseigenschaften asymmetrisch veränderbar ist. Das Dokument erläutert dann aber nicht, wozu das genutzt werden kann.

Die DE 20 2012 105 023 U1 beschreibt ein Handlaserentfernungsmessgerät mit einer Flüssiglinse, die das Zittern eines Bedieners in zwei zueinander senkrechten Richtungen ausgleichen kann.

Es ist daher Aufgabe der Erfindung, die Bildqualität bei der Aufnahme bewegter Objekte zu verbessern.

Diese Aufgabe wird durch eine optoelektronische Vorrichtung in stationärer Montage und ein Verfahren zum Aufnehmen eines Bildes eines bewegten Objekts nach Anspruch 1 beziehungsweise 12 gelöst. Die erfindungsgemäße optoelektronische Vorrichtung ist fest an einem Überwachungsbereich montiert, wird also nicht von Hand gehalten, so dass ein Verwackeln aufgrund einer Eigenbewegung von Vorneherein ausgeschlossen ist. Allerdings befinden sich die aufzunehmenden Objekte in Bewegung. Die Erfindung geht von dem Grundgedanken aus, Informationen über diese Bewegung als externes Eingangssignal zu erhalten und aufgrund dessen während einer Aufnahme eine adaptiven Linse einer Empfangsoptik in eine Kippbewegung zu versetzen, welche die Auswirkungen der Bewegung der Objekte auf die Aufnahme kompensiert. Anders ausgedrückt schwenkt die Vorrichtung ihren Aufnahme- oder Sichtbereich innerhalb der Belichtungszeit mit dem Objekt mit, wobei dessen Bewegung aus dem Eingangssignal abgeleitet wird. Durch diese dynamische Nachführung bewegt sich das von der Empfangsoptik erzeugte Bild des Objekts auf dem Bildsensor nicht oder zumindest so wenig wie möglich. Die Aufnahme erfolgt also möglichst weitgehend so, als sei das Objekt in Ruhe.

Das externe Eingangssignal, aus dem das Bewegungsverhalten des Objekts und damit die erforderliche Kippbewegung abgeleitet wird, kann ein vorab eingegebener Parameter, ein dynamischer Parameter oder das konstante oder zeitabhängige Signal eines externen Sensors sein. Die Auswertungseinheit berechnet dann jeweils die Bewegung des Objekts. Alternativ wird die Bewegung des Objekts schon extern bestimmt oder berechnet und als solche vorgegeben.

Die Erfindung hat den Vorteil, dass längere Belichtungszeiten möglich werden beziehungsweise ein Verwackeln innerhalb der Belichtungszeit reduziert wird, weil das Sichtfeld dem Objekt folgt. Durch das Unterdrücken von Bewegungsartefakten werden wesentlich hochwertigere Bilder aufgenommen. Dabei ist der Aufbau der Vorrichtung sehr kompakt und kostengünstig. Durch den Verzicht auf bewegliche Teile wird die Vorrichtung auch sehr ausfallsicher und wartungsarm. Die adaptive Linse ermöglicht ein Nachführen des Sichtfeldes in wesentlich einfacherer und kompakterer Weise als ein mechanisch verschwenkbares optisches Element, wie beispielsweise ein Kippspiegel.

Die Vorrichtung weist bevorzugt eine Beleuchtungseinrichtung zum Ausleuchten mindestens eines Teils des Überwachungsbereichs auf. Die Leistungsfähigkeit der Beleuchtungseinrichtung kann gegenüber sonst üblichen Beleuchtungen erheblich reduziert werden, da durch die Nachführung des Sichtfeldes beziehungsweise Aufnahmebereichs längere Belichtungszeiten weitgehend ohne Bewegungsartefakte möglich werden. Die längeren Belichtungszeiten erlauben in manchen Fällen sogar den Verzicht auf eine eigene Beleuchtung unter Ausnutzen nur des Umgebungslichts.

Die Beleuchtungseinrichtung weist bevorzugt eine Sendeoptik mit einer adaptiven Linse auf, wobei die Auswertungseinheit dafür ausgebildet ist, die adaptive Linse während einer Aufnahme des Objekts so zu verkippen, dass die Bewegung des Objekts kompensiert ist. Die adaptive Linse der Sendeoptik kann eine separate zweite adaptive Linse oder dieselbe adaptive Linse wie diejenige der Empfangsoptik sein. Im letzteren Fall sind dann Sende- und Empfangsoptik identisch. Der Beleuchtungsbereich wird durch die adaptive Linse der Sendeoptik zumindest im Wesentlichen synchron zum Sichtfeld nachgeführt, so dass die Beleuchtungsleistung auf das jeweilige momentane Sichtfeld gebündelt werden kann. Alternativ weist die Sendeoptik keine adaptive Linse auf, und der Beleuchtungsbereich ist so groß, dass das Sichtfeld trotz seines Nachführens innerhalb des Beleuchtungsbereichs bleibt.

Die Vorrichtung ist bevorzugt an einer Förderanlage montiert, wobei die zu erfassenden Objekte einen von der Förderanlage bewegten Objektstrom bilden. In diesem Fall gibt die Förderanlage die Bewegung der Objekte vor, so dass Kenntnisse über das Förderverhalten ausreichen, um das Bewegungsverhalten der Objekte zu charakterisieren.

Die Auswertungseinheit ist bevorzugt dafür ausgebildet, ein Sichtfeld des Bildsensors während einer Aufnahme mit dem Objektstrom mitzuführen, indem die adaptive Linse mit einer der Bewegung des Objektstroms entsprechenden Winkelgeschwindigkeit mitgeschwenkt wird. Die adaptive Linse wird dabei in Kenntnis des Verhaltens des Objektstroms für eine Aufnahme jeweils in eine Ausgangsposition verkippt, schwenkt dann während der Belichtungszeit mit dem Objektstrom mit und wird anschließend für die nachfolgende Aufnahme wieder in die Ausgangsposition versetzt. So kann der Objektstrom auch über einen längeren Zeitraum durch Aufnahmen erfasst werden, in denen der Einfluss von Bewegungsartefakten unterdrückt ist.

Das Eingangssignal umfasst bevorzugt eine Information über die Fördergeschwindigkeit der Förderanlage. Das kann ein Parameter einer festgelegten, konstanten oder variablen Fördergeschwindigkeit sein, welcher der Vorrichtung vorab oder während des Betriebs zugeführt wird. Ebenso kann die Fördergeschwindigkeit im Betrieb von einem Sensor bestimmt werden, etwa einem Inkrementalgeber an einem Förderband, welcher direkt oder über eine übergeordnete Steuerung mit der Vorrichtung verbunden ist.

Das Eingangssignal umfasst bevorzugt Positions- und Geometrieeigenschaften der zu erfassenden Objekte. Dadurch ist die Kontur der zu erfassenden Objekte bekannt und kann für eine kompensierende Verschwenkbewegung der adaptiven Linse genutzt werden. Zur Erfassung wird insbesondere ein weiterer Sensor eingesetzt, wie ein Lichtgitter oder ein entfernungsmessender Laserscanner.

Das Eingangssignal enthält bevorzugt eine Abstandsinformation des aufzunehmenden Objekts, oder die Vorrichtung weist einen Abstandssensor zur Bestimmung der Abstandsinformation auf, wobei die Auswertungseinheit dafür ausgebildet ist, anhand des Abstandssignals eine Brennweite der adaptiven Linse einzustellen. Die adaptive Linse wird in dieser Ausführungsform nicht nur dynamisch verkippt, sondern zugleich durch Anpassung der Brennweite in die erforderliche Fokuslage gebracht.

Die Auswertungseinheit ist bevorzugt zum Auslesen von Codeinformationen aus von dem Bildsensor aufgenommenen Bilddaten ausgebildet. Die Vorrichtung wird damit zu einem Codeleser. Durch die erfindungsgemäße Unterdrückung von Bewegungsartefakten können gerade diejenigen Objektoberflächen, auf denen sich Codes befinden könnten oder auf denen durch andere Sensoren bereits Codebereiche erkannt sind, mit hoher Auflösung, ausreichend belichtet und ohne Bewegungsartefakte erfasst werden.

Die adaptive Linse ist bevorzugt eine Flüssiglinse oder eine Gellinse. Solche Linsen bieten die gewünschten Einstellmöglichkeiten und sind dabei sehr bauklein und kostengünstig. Das Verkippen einer solchen Linse bedeutet natürlich nicht zwingend ein geometrisches Verkippen, sondern bezieht sich auf die optische Wirkung, die effektiv einer Verkippung entspricht.

Die adaptive Linse weist bevorzugt in Umlaufrichtung segmentierte Ansteuerelemente auf. Bei den Ansteuerelementen handelt es sich beispielsweise um segmentierte Elektroden, die eine Flüssiglinse über den Elektrobenetzungseffekt steuern. Denkbar sind weiterhin segmentierte Aktoren, insbesondere Piezoaktoren, die den Druck auf eine Flüssigkeit lokal verändern und dadurch eine Membran auf Flüssigkeit unterschiedlich krümmen, oder die direkt eine gelartige Substanz der Linse verformen. Durch die Segmentierung in Umlaufrichtung wird eine nicht rotationssymmetrische Beeinflussung der Linse ermöglicht, die zu der optischen Verkippung führt.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an die unabhängigen Ansprüche anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Schnittdarstellung einer optoelektronischen Vorrichtung mit einem Lichtempfänger und einer verkippbaren adaptiven Linse in der Empfangsoptik;
- Fig. 2: eine Übersichtsdarstellung der beispielhaften Anordnung einer erfindungsgemäßen Vorrichtung an einem Förderband;
- Fig. 3a-d: eine Illustration des dynamischen Verkippens einer adaptiven Linse zum Mitführen des Sichtfeldes während einer Aufnahme eines bewegten Objekst;
- Fig. 4a: eine Darstellung einer adaptiven Linse in einer strahlaufweitenden Einstellung;
- Fig. 4b: eine Darstellung der adaptiven Linse in einer neutralen Einstellung;
- Fig. 4c: eine Darstellung der adaptiven Linse in einer strahlbündelnden Einstellung;
- Fig. 5a: eine Darstellung der adaptiven Linse mit Verkippen nach unten;
- Fig. 5b: eine Darstellung der adaptiven Linse ohne Verkippen;
- Fig. 5c: eine Darstellung der adaptiven Linse mit Verkippen nach oben; und
- Fig. 6: eine Draufsicht auf die adaptive Linse zur Illustration einer segmentierten, nicht rotationssymmetrischen Ansteuerung.

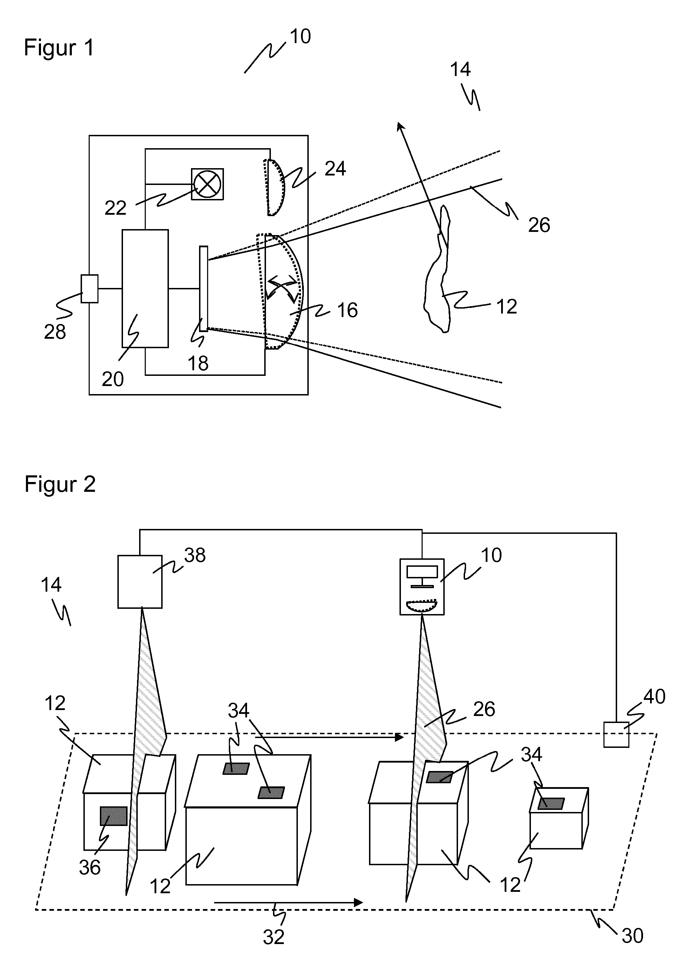

Figur 1 zeigt eine schematische Schnittdarstellung einer Ausführungsform einer optoelektronischen Vorrichtung 10 zur Aufnahme von Bildern von Objekten 12, die sich wie durch den Pfeil angedeutet in einem Überwachungsbereich 14 bewegen. Über eine Empfangsoptik 16 erzeugt ein Bildsensor 18, beispielsweise ein CCD- oder CMOS-Chip, die Aufnahmen. Die Bilddaten dieser Aufnahmen werden an eine Auswertungseinheit 20 weitergegeben. Ein optionaler Lichtsender 22 mit vorgeordneter Sendeoptik 24 dient der aktiven Ausleuchtung eines Aufnahmebereichs oder Sichtfelds 26 der Vorrichtung 10. Mögliche Anwendungen der Vorrichtung 10 sind die Detektion, Identifikation, Inspektion oder Vermessung von Objekten. Durch den Einsatz an sich bekannter Signal- oder Bildverarbeitungen zum Lesen von Codes entsteht ein kamerabasierter Codeleser.

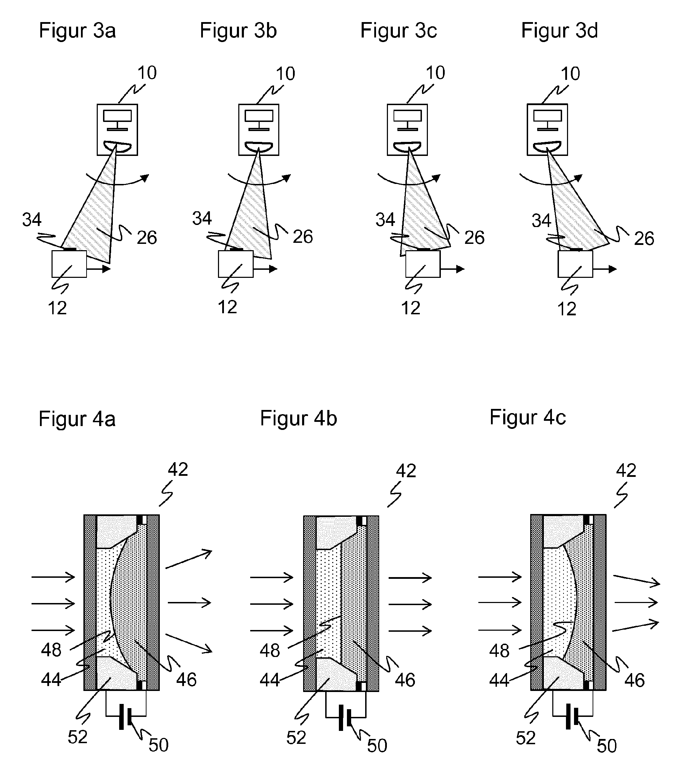

Die Empfangsoptik 16 weist eine adaptive Linse auf, die durch elektronische Ansteuerung der Auswertungseinheit 20 verkippt werden kann. Durch das Verkippen ergibt sich eine Variation des Sichtfeldes 26. Das Funktionsprinzip der adaptiven Linse wird weiter unten anhand der Figuren 4 bis 6 näher erläutert. Die Empfangsoptik 16 kann außer der dargestellten adaptiven Linse noch weitere nicht gezeigte optische Elemente aufweisen, wie Linsen, Spiegel, Blenden, Filter oder mehrere adaptive Linsen.

Die Möglichkeit, durch Verkippen der adaptiven Linse das Sichtfeld 26 zu variieren, wird erfindungsgemäß dazu genutzt, der Bewegung des Objekts 12 während der Belichtungszeit zu folgen, um Bewegungsartefakte zu unterdrücken. Dazu werden der Vorrichtung 10 über einen Eingang 28 Parameter, Signale externer Sensoren oder sonstige Informationen über die Bewegung des Objekts 12 zur Verfügung gestellt. Daraus ermittelt die Auswertungseinheit 20 die erforderliche Kippbewegung. Alternativ wird die erforderliche Kippbewegung direkt über den Eingang 28 vorgegeben.

Die Sendeoptik 24 ist in Figur 1 ebenfalls mit einer adaptiven Linse dargestellt und darüber in der Lage, das aktive Beleuchtungsfeld des Lichtsenders 22 synchron mit dem Sichtfeld 26 des Bildsensors 16 zu bewegen. In nicht gezeigten Ausführungsformen kann stattdessen eine starre Sendeoptik eingesetzt oder der Sendepfad über die dann als Sendeoptik mitgenutzte Empfangsoptik geführt werden.

Wie in Figur 2 dargestellt, wird die Vorrichtung 10 für ihren Betrieb stationär montiert. In dem dargestellten Beispiel ist die Vorrichtung 10 über einem Förderband 30 montiert, welches Objekte 12, wie durch den Pfeil 32 angedeutet, durch das Sichtfeld 26 der Vorrichtung 10 fördert. Die Objekte 12 können an ihren Außenflächen Codebereiche 34 tragen. Eine denkbare Aufgabe der Vorrichtung 10, die dann als kamerabasierter Codeleser arbeitet, ist die Erkennung der Codebereiche 34 und das Auslesen, Dekodieren und Zuordnen der darin befindlichen Codes zu dem jeweils zugehörigen Objekt 12. In anderen Anwendungen werden andere Objekteigenschaften erfasst, beispielsweise die Geometrie, Art oder Anzahl der Objekte 12.

Die Codebereiche 34 können von der Vorrichtung 10 nur dann erkannt werden, wenn sie auf der Oberseite oder zumindest von oben sichtbar angebracht sind. Daher kann abweichend von der Darstellung in Figur 2 zum Erfassen eines etwa seitlich oder unten angebrachten Codes 36 eine Mehrzahl von Vorrichtungen 10 aus verschiedenen Richtungen montiert sein, um eine sogenannte Omni-Erfassung oder -lesung aus allen Richtungen zu ermöglichen. Die Anordnung mehrerer als Codeleser ausgebildeter Vorrichtungen zu einem Lesesystem erfolgt in der Praxis meist als Lesetunnel.

Das Sichtfeld 26 der Vorrichtung 10 ist in dem Beispiel der Figur 2 eine Ebene und der zugehörige Bildsensor 18 somit ein Zeilensensor. Indem die Objekte 12 in der Förderrichtung 32 zeilenweise aufgenommen werden, entsteht nach und nach ein Gesamtbild der vorbeigeförderten Objekte 12 samt der Codebereiche 34. Alternativ ist aber auch denkbar, einen Matrixsensor als Bildsensor 18 einzusetzen, der unmittelbar mit jeder Aufnahme und nicht erst durch Zusammenfügen mehrerer Aufnahmen ein zweidimensionales Bild erzeugt. Auch mit einem Matrixsensor ist jedoch umgekehrt das Zusammenfügen zu einem größeren Gesamtbild denkbar, wenn die Überlappungsbereiche aufeinanderfolgender Aufnahmen berücksichtigt werden ("Image Stitching"). Auf ähnliche Weise kann das Sichtfeld 26 zu dem Förderband 30 durch Nebeneinanderanordnung mehrerer Vorrichtungen 10 verbreitert werden.

Bezüglich der Förderrichtung 32 oberhalb der Vorrichtung 10 und mit deren Eingang 28 verbunden ist optional ein weiterer Sensor 38 vorgesehen, beispielsweise ein entfernungsmessender Laserscanner. Der weitere Sensor 38 erfasst im Laufe der Förderbewegung die Höhenkontur der Objekte 12. Diese Information wird an die Vorrichtung 10 weitergegeben. Ebenfalls optional ist ein Inkrementalgeber 40 oder sonstiger Sensor zum Bestimmen der Fördergeschwindigkeit an dem Förderband 30 angebracht und mit der Vorrichtung 10 verbunden.

Figur 3 illustriert in vier beispielhaften, zeitlich aufeinanderfolgenden Schritten das dynamische Verkippen der adaptiven Linse zum Mitführen des Sichtfeldes 26 während der Aufnahme des bewegten Objekts 12, um Bewegungsartefakte zu reduzieren. Von dem Inkrementalgeber 40, alternativ als Parameter, von einem anderen Sensor oder von einer übergeordneten Steuerung, bekommt die Auswertungseinheit 20 die Fördergeschwindigkeit der Objekte 12 auf dem Förderband 30 mitgeteilt. Vorzugsweise erhält die Auswertungseinheit 20 zusätzlich von dem weiteren Sensor 38 auch Geometriedaten, aus denen der Objektabstand bestimmt werden kann, oder der Objektabstand wird unmittelbar über den Eingang 28 mitgeteilt oder nochmals alternativ durch einen Abstandssensor der Vorrichtung 10 selbst ermittelt. Alternativ werden lediglich vereinfachende Annahmen über den Objektabstand getroffen.

Aus den beiden Eingangsgrößen Fördergeschwindigkeit und Objektabstand ermittelt die Auswertungseinheit 20 nun die erforderliche Winkelgeschwindigkeit für eine Kippbewegung der adaptiven Linse, die dazu führt, dass sich das Sichtfeld 26 mit dem Objekt 12 mitbewegt. Auch hier können alternativ über den Eingang 28 nicht nur Eingangsgrößen, sondern bereits die erforderliche Kippbewegung der adaptiven Linse vorgegeben werden. Aufgrund der Kippbewegung ruht das von der Empfangsoptik 16 mit ihrer dynamisch verkippten adaptiven Linse erzeugte Abbild des Objekts 12 bezüglich des Bildsensors 18, oder zumindest sind dessen Bewegungen deutlich reduziert. Deshalb wird die Bildaufnahme auch bei langen Belichtungszeiten wesentlich schärfer. Die langen Belichtungszeiten erlauben umgekehrt, die Leistung der Lichtquelle 22 erheblich zu reduzieren beziehungsweise eine schwächere oder gar keine Lichtquelle 22 einzusetzen.

Der Objektabstand wird vorzugsweise außerdem dazu genutzt, die Brennweite der adaptiven Linse einzustellen und somit die Empfangsoptik 16 während der gesamten Aufnahme scharf auf das zu erfassende Objekt 12 einzustellen.

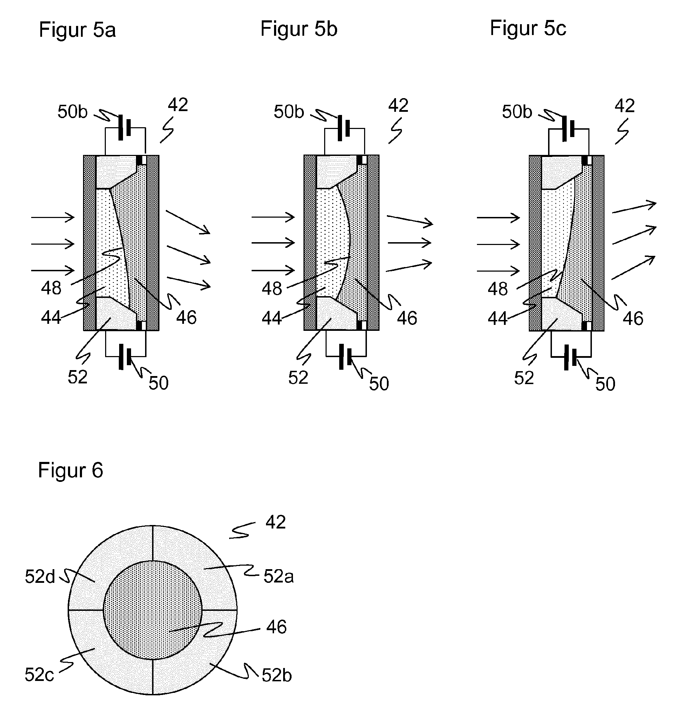

Die Figuren 4 und 5 zeigen die adaptive Linse der Empfangsoptik 16 beziehungsweise der Sendeoptik 24 in einer beispielhaften Ausführungsform als Flüssiglinse 42 nach dem Elektrobenetzungseffekt. Die Funktionsweise wird anhand dieser Flüssiglinse 42 erläutert, aber die Erfindung umfasst auch andere adaptive Linsen, beispielsweise solche mit einer Flüssigkeitskammer und einer diese bedeckenden Membran, deren Wölbung durch Druck auf die Flüssigkeit verändert wird, oder Linsen mit einem gelartigen optisch durchlässigen Material, dass durch eine Aktorik mechanisch verformt wird.

Die aktiv durchstimmbare Flüssiglinse 42 weist zwei transparente, nicht mischbare Flüssigkeiten 44, 46 mit unterschiedlichen Brechungsindizes und gleicher Dichte auf. Die Form der Flüssigkeits-Flüssigkeitsgrenzschicht 48 zwischen den beiden Flüssigkeiten 44, 46 wird zu optischen Funktion verwendet. Die Aktuierung basiert auf dem Prinzip der Elektrobenetzung, welche eine Abhängigkeit der Oberflächen- oder Grenzflächenspannung vom angelegten elektrischen Feld zeigt. Deshalb ist es möglich, die Form der Grenzschicht 44 und damit die optischen Eigenschaften der Flüssiglinse 42 durch elektrische Ansteuerung an einem Anschluss 50 zu verändern, wodurch entsprechende Spannungen an einer Elektrode 52 anliegen.

Figur 4 zeigt zunächst die länger bekannte Veränderung der Fokuseigenschaften der Flüssiglinse 42. In Figur 4a wird einfallendes Licht an einer konkaven Grenzschicht 48 aufgestreut. Figur 4b zeigt eine neutrale Einstellung mit flacher Grenzschicht 48, während in Figur 4c die Grenzschicht 48 konvex ist und damit das einfallende Licht bündelt. Es ist klar, dass durch entsprechende Zwischeneinstellungen das Brechungsverhalten feiner abgestuft und beispielsweise eine Brennweite eingestellt werden kann.

Die Flüssiglinse 42 kann aber auch in ihrer Verkippung beeinflusst werden. Dies wird in Figur 5 illustriert und beruht auf nicht rotationssymmetrisch angelegten Spannungen und damit elektrischen Feldern. Dementsprechend wird die Grenzschicht 48 nicht rotationssymmetrisch verformt, was für die Verkippung ausgenutzt wird. Figur 5a zeigt eine Verkippung der Flüssiglinse 42 nach unten, Figur 5b eine rotationssymmetrische Einstellung ohne Verkippung zum Vergleich, und Figur 5c eine Verkippung der Flüssiglinse 42 nach oben. Dabei bezieht sich die Richtung der Verkippung jeweils auf die optische Wirkung, also aus welcher Richtung Licht empfangen wird beziehungsweise in welche Richtung Sendelicht ausgesandt wird. Der Verkippung kann jeweils eine Fokussierung überlagert sein.

Figur 6 zeigt eine Draufsicht auf die Flüssiglinse 42, um nochmals die nicht rotationssymmetrische Ansteuerung zu erläutern. Dazu wird nämlich die Elektrode 52 segmentiert. Zur Ansteuerung der hier beispielhaft vier Segmente 52a-d kann mindestens ein in Figur 5 gezeigter zusätzlicher Anschluss 50b erforderlich werden. Durch Anlegen unterschiedlicher Spannungen an die Segmente 52a-d wird die Grenzschicht 48 in einer nicht rotationssymmetrischen Weise verformt, und deshalb kann neben der Brennweite auch eine Verkippung der Linsenform eingestellt werden.

## Patentansprüche

1. Optoelektronische Vorrichtung (10) geeignet zur stationären Montage an einem Überwachungsbereich (14) mit zu erfassenden Objekten (12), wobei die Vorrichtung einen Bildsensor (18) zum Erzeugen von Aufnahmen der Objekte (12), eine dem Bildsensor (18) zugeordnete Empfangsoptik zur Erzeugung von Bildern der Objekte auf dem Bildsensor (16) mit einer adaptiven Linse (42) mit variabler Verkippung, sodass es sich eine Variation des Sichtfeldes im Überwachungsbereich der Vorrichtung ergibt, und eine Auswertungseinheit (20) zum Bestimmen von Objektinformationen aus einer Aufnahme aufweist, **dadurch gekennzeichnet,**
**dass** die Auswertungseinheit (20) dafür ausgebildet ist, aus einem externen Eingangssignal (28) das Bewegungsverhalten eines aufzunehmenden Objekts (12) abzuleiten und die adaptive Linse (42) während einer Aufnahme des Objekts (12) so zu verkippen, dass die Auswirkungen der Bewegung des Objekts (12) auf die Aufnahme kompensiert sind, wobei die Vorrichtung (10) dazu ausgebildet ist ihren Aufnahmebereich mit dem Objekt (12) mitzuschwenken.

2. Vorrichtung (10) nach Anspruch 1,
die eine Beleuchtungseinrichtung (22) zum Ausleuchten mindestens eines Teils des Überwachungsbereichs (14) aufweist.

3. Vorrichtung (10) nach Anspruch 2,
wobei die Beleuchtungseinrichtung (22) eine Sendeoptik (24) mit einer adaptiven Linse (42) aufweist, und wobei die Auswertungseinheit (20) dafür ausgebildet ist, die adaptive Linse (42) während einer Aufnahme des Objekts (12) so zu verkippen, dass die Bewegung des Objekts (12) kompensiert ist.

4. Vorrichtung umfassend eine optoelektronische Vorrichtung (10) nach einem der vorhergehenden Ansprüche, und eine Förderanlage, wobei die optoelektronische Vorrichtung an der Förderanlage (30) montiert ist, und wobei die zu erfassenden Objekte (12) einen von der Förderanlage (30) bewegten Objektstrom bilden.

5. Vorrichtung (10) nach Anspruch 4,
wobei die Auswertungseinheit (20) dafür ausgebildet ist, ein Sichtfeld (26) des Bildsensors (18) während einer Aufnahme mit dem Objektstrom mitzuführen, indem die adaptive Linse (42) mit einer der Bewegung des Objektstroms entsprechenden Winkelgeschwindigkeit mitgeschwenkt wird.

6. Vorrichtung (10) nach Anspruch 4 oder 5,
wobei das Eingangssignal eine Information über die Fördergeschwindigkeit der Förderanlage (30) umfasst.

7. Vorrichtung (10) nach einem der vorhergehenden Ansprüche,
wobei das Eingangssignal (28) Positions- und Geometrieeigenschaften der zu erfassenden Objekte (12) umfasst.

8. Vorrichtung (10) nach einem der vorhergehenden Ansprüche,
wobei das Eingangssignal (28) eine Abstandsinformation des aufzunehmenden Objekts (12) enthält oder wobei die Vorrichtung (10) einen Abstandssensor zur Bestimmung der Abstandsinformation aufweist, und wobei die Auswertungseinheit (20) dafür ausgebildet ist, anhand des Abstandssignals eine Brennweite der adaptiven Linse (42) einzustellen.

9. Vorrichtung (10) nach einem der vorhergehenden Ansprüche,
wobei die Auswertungseinheit (20) zum Auslesen von Codeinformationen aus von dem Bildsensor (18) aufgenommenen Bilddaten ausgebildet ist.

10. Optoelektronische Vorrichtung (10) nach einem der vorhergehenden Ansprüche,
wobei die adaptive Linse (42) eine Flüssiglinse oder eine Gellinse ist.

11. Optoelektronische Vorrichtung (10) nach einem der vorhergehenden Ansprüche,
wobei die adaptive Linse (42) in Umlaufrichtung segmentierte Ansteuerelemente (52a-d) aufweist.

12. Verfahren zum Aufnehmen eines Bildes eines bewegten Objekts (12) in einem Überwachungsbereich mit einer stationär montierten optoelektronischen Vorrichtung (10), die einen Bildsensor (18) und eine dem Bildsensor (18) zugeordnete Empfangsoptik (16) zur Erzeugung von Bildern der Objekte auf dem Bildsensor, mit einer adaptiven Linse (42) mit variabler Verkippung aufweist, sodass es sich eine Variation des Sichtfeldes im Überwachungsbereich der Vorrichtung ergibt,
**dadurch gekennzeichnet,**
**dass** das Bewegungsverhalten des Objekts (12) aus einem externen Eingangssignal von einer Auswertungseinheit abegleitet wird, und die adapative Linse (42) während der Aufnahme eines Bildes des Objekts so verkippt wird, dass die Auswirkungen der Bewegung des Objekts (12) auf die Aufnahme kompensiert werden, indem der Aufnahmebereich mit dem Objekt (12) mitgeschwenkt wird.

## Claims

1. An optoelectronic apparatus (10) suitable for a stationary mounting at a monitoring region (14) with objects (12) to be detected, the apparatus comprising an image sensor (18) for generating images of the objects (12), a receiving optics (16) associated with the image sensor (18) for generating images of the objects on the image sensor (18), the reception optics having an adaptive lens (42) with variable tilt so that there is a variation of the field of view in the monitoring area of the apparatus, and an evaluation unit (20) for determining object information from an image,
**characterized in that** the evaluation unit (20) is configured to derive the movement behavior of the object (12) to be detected from an external input signal (28) and to tilt the adaptive lens (42) during an imaging of the object (12) so that effects of the movement of the object (12) on the imaging are compensated, wherein the apparatus (10) is configured to move its imaging area with the object (12).

2. The apparatus (10) according to claim 1,
having an illumination unit (22) for illuminating at least a part of the monitoring area (14).

3. The apparatus (10) according to claim 2,
wherein the illumination unit (22) has a transmitting optics having an adaptive lens (42), and wherein the evaluation unit (20) is configured to tilt the adaptive lens (42) during an imaging of the object (12) so that the movement of the object (12) is compensated.

4. An apparatus including an optoelectronic apparatus (10) according to any of the preceding claims and a conveying system, wherein the optoelectronic apparatus is mounted at the conveying system (30), and wherein the objects (12) to be detected form an object stream moved by the conveying system (30).

5. The apparatus (10) according to claim 4,
wherein the evaluation unit (20) is configured to move a field of view (26) of the image sensor (18) during an imaging with the object stream in that the adaptive lens (42) is moved with an angular velocity corresponding to the movement of the object stream.

6. The apparatus (10) according to claim 4 or 5,
wherein the input signal comprises information on the conveying speed of the conveying system (30).

7. The apparatus (10) according to any of the preceding claims,
wherein the input signal (28) comprises positional properties and geometrical properties of the objects (12) to be detected.

8. The apparatus (10) according to any of the preceding claims,
wherein the input signal (28) includes distance information of the object (12) to be detected, or wherein the apparatus (10) comprises a distance sensor for determining the distance information, and wherein the evaluation unit (20) is configured to set a focal length of the adaptive lens (42) with reference to the distance information.

9. The apparatus (10) according to any of the preceding claims,
wherein the evaluation unit (20) is configured for reading code information from image data taken by the image sensor(18).

10. The apparatus (10) according to any of the preceding claims,
wherein the adaptive lens (42) is a liquid lens or a gel lens.

11. The apparatus (10) according to any of the preceding claims,
wherein the adaptive lens (42) has segmented control elements (52a-d) in circumferential direction.

12. A method for taking an image of a moving object (12) in a monitoring area using an optoelectronic apparatus (10) in stationary mounting which comprises an image sensor (18) and a receiving optics (16) associated with the image sensor (18) for generating images of the objects on the image sensor, the receiving optics (18) having an adaptive lens (42) with a variable tilt so that there is a variation of the field of view in the monitoring area of the apparatus,
**characterized in that** the movement behavior of the object (12) is derived from an external input signal (28) by an evaluation unit, and **in that** the adaptive lens (42) is tilted during the taking of an image of the object (12) so that effects of the movement of the object (12) on the taking of the image are compensated by moving the imaging area with the object (12).

## Revendications

1. Dispositif optoélectronique (10) approprié pour le montage stationnaire au niveau d'une zone de surveillance (14) avec des objets (12) à surveiller, dans lequel le dispositif comprend un capteur d'image (18) pour engendrer des enregistrements des objets (12), une optique de réception associée au capteur d'image (18) pour engendrer des images des objets sur le capteur d'image (16) avec une lentille adaptative (42) à basculement variable, de sorte qu'il en résulte une variation du champ de vision dans la zone de surveillance, et une unité d'évaluation (20) pour déterminer des informations d'objets à partir d'un enregistrement, **caractérisé en ce que**
l'unité d'évaluation (20) est réalisée pour dériver, à partir d'un signal d'entrée externe (28), le comportement de mouvement d'un objet (12) à enregistrer et, pendant un enregistrement de l'objet (12), pour faire basculer la lentille adaptatrice (42) de telle façon que les effets du déplacement de l'objet (12) sur l'enregistrement sont compensés, dans lequel le dispositif (10) est réalisé pour faire pivoter sa zone d'enregistrement conjointement avec l'objet (12).

2. Dispositif (10) selon la revendication 1,
qui comprend un système d'éclairage (22) pour illuminer au moins une partie de la zone de surveillance (14).

3. Dispositif (10) selon la revendication 2,
dans lequel le système d'éclairage (22) comprend une optique d'émission (24) avec une lentille adaptative (42), et dans lequel l'unité d'évaluation (20) est réalisée pour, pendant un enregistrement de l'objet (12), faire basculer la lentille adaptative (42) de telle façon que le mouvement de l'objet (12) est compensé.

4. Dispositif incluant un dispositif optoélectronique (10) selon l'une des revendications précédentes, et une installation de convoyage, tel que le dispositif optoélectronique est monté au niveau de l'installation de convoyage (30), et tel que les objets à détecter (12) forment un flux d'objets déplacés par l'installation de convoyage (30).

5. Dispositif (10) selon la revendication 4,
dans lequel l'unité d'évaluation (20) est réalisée pour déplacer un champ de vision (26) du capteur d'image (18) conjointement avec le flux d'objets pendant un enregistrement, du fait que la lentille adaptative (42) est pivotée conjointement avec une vitesse angulaire correspondant au déplacement du flux d'objets.

6. Dispositif (10) selon la revendication 4 ou 5,
dans lequel le signal d'entrée inclut une information sur la vitesse de convoyage de l'installation de convoyage (30).

7. Dispositif (10) selon l'une des revendications précédentes,
dans lequel le signal d'entrée (28) inclut des propriétés de position et des propriétés géométriques des objets à détecter (12).

8. Dispositif (10) selon l'une des revendications précédentes,
dans lequel le signal d'entrée (28) contient une information de distance de l'objet (12) à enregistrer, ou bien dans lequel le dispositif (10) comprend un capteur de distance pour la détermination de l'information de distance, et dans lequel l'unité d'évaluation (20) est réalisée pour ajuster une distance focale de la lentille adaptative (42) au moyen du signal de distance.

9. Dispositif (10) selon l'une des revendications précédentes,
dans lequel l'unité d'évaluation (20) est réalisée pour lire des informations codées à partir de données d'images enregistrées par le capteur d'image (18).

10. Dispositif optoélectronique (10) selon l'une des revendications précédentes,
dans lequel la lentille adaptative (42) est une lentille à liquide ou une lentille à gel.

11. Dispositif optoélectronique (10) selon l'une des revendications précédentes,
dans lequel la lentille adaptative (42) comprend des éléments de pilotage (52a-d) segmentés en direction périphérique.

12. Procédé pour l'enregistrement d'une image d'un objet déplacé (12) dans une zone de surveillance au moyen d'un dispositif optoélectronique (10) monté stationnaire, qui comprend un capteur d'image (18) et une optique de réception (16) associée au capteur d'image (18) pour engendrer des images des objets sur le capteur d'image au moyen d'une lentille adaptative (42) à basculement variable, de sorte qu'il en résulte une variation du champ de vision dans la zone de surveillance du dispositif,
**caractérisé en ce que**
le comportement de déplacement de l'objet (12) est dérivé d'un signal de réception externe par une unité d'évaluation, et la lentille adaptative (42) est basculée, pendant l'enregistrement d'une image de l'objet, de telle façon que les effets du mouvement de l'objet (12) sur l'enregistrement sont compensés, du fait que la zone de réception est pivotée conjointement avec l'objet (12).
